**Europäisches Patentamt**

**European Patent Office**

**Office européen des brevets**

(19)

(11) Numéro de publication : **0 420 760 B1**

(12)

# FASCICULE DE BREVET EUROPEEN

(45) Date de publication du fascicule du brevet :
**08.06.94 Bulletin 94/23**

(51) Int. Cl.⁵ : **F41G 9/02,** F41G 7/36,
G05D 1/10

(21) Numéro de dépôt : **90402685.3**

(22) Date de dépôt : **28.09.90**

(54) **Procédé et système de guidage autonome vers une cible d'un projectile balistique aéroporté propulsé.**

(30) Priorité : **29.09.89 FR 8912765**

(43) Date de publication de la demande :
**03.04.91 Bulletin 91/14**

(45) Mention de la délivrance du brevet :
**08.06.94 Bulletin 94/23**

(84) Etats contractants désignés :
**BE DE ES GB IT**

(56) Documents cités :
**DE-A- 2 745 454
FR-A- 2 443 661
US-A- 2 712 269
US-A- 3 497 161
US-A- 3 827 655
US-A- 4 470 562
JOURNAL OF GUIDANCE, CONTROL AND DYNAMICS, vol. 11, no. 3, May-June 1988, pages193-198, Washington, DC, US; G. GRE-GORIOU: "CEP calculations for a rocket with different control systems"
NED. T. NATUURK., vol. 33, décembre 1967, pages 386-395; C. MEINER:"Weightlessness"**

(73) Titulaire : **SOCIETE DE FABRICATION D'INSTRUMENTS DE MESURE (S.F.I.M.)
13, avenue Marcel Ramolfo-Garnier
F-91344 Massy Cédex (FR)**

(72) Inventeur : **Bezanere, Daniel
1 Parvis du Breuil
F-91260 Antony (FR)**
Inventeur : **Raffy, Alain
44 Allée de la Goiarderie
F-91190 Gif/Yvette (FR)**
Inventeur : **Audren, Jean Thierry
14 Allée des Genêts
F-91940 Les Ulis (FR)**

(74) Mandataire : **Schrimpf, Robert et al
Cabinet Regimbeau
26, Avenue Kléber
F-75116 Paris (FR)**

**EP 0 420 760 B1**

Jouve, 18, rue Saint-Denis, 75001 PARIS

## Description

Les avions de combat modernes sont, de nos jours, dotés de deux types de systèmes d'armes, les engins guidés, de type missiles air-sol, généralement propulsés et les engins non guidés et non propulsés, plus communément appelés projectiles, tels que les bombes lisses par exemple.

En ce qui concerne les engins de type missiles, la précision de guidage inertiel de ces derniers est donnée par la bonne connaissance, pour le système de guidage, des conditions initiales du lancement. Les systèmes de guidage correspondants doivent, en conséquence, être soumis à des procédures d'alignement complexes, et les missiles précités nécessitent la mise en oeuvre d'un matériel complexe de télétransmission de données entre le missile et le porteur, afin d'assurer le transfert des paramètres dynamiques du porteur vers le missile, et, si nécessaire, leur correction.

Les engins guidés précités sont donc en principe, en raison des coûts importants des matériels nécessaires à leur mise en oeuvre, réservés à des missions stratégiques, car ils sont ainsi susceptibles d'être largués à des distances importantes de la cible à atteindre, plusieurs dizaines de kilomètres.

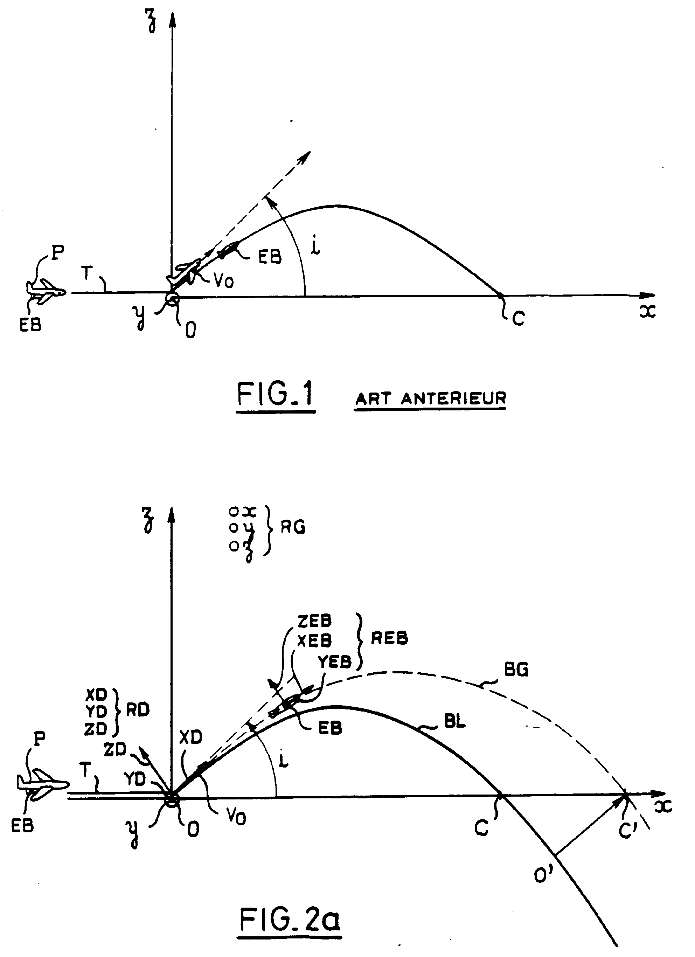

En ce qui concerne par contre les engins de type projectiles, ces derniers, lancés en balistique atmosphérique sur leur trajectoire vers la cible, ne peuvent prétendre atteindre des portées supérieures à 9 km environ, la portée normale étant de l'ordre de 5 km. En effet, ainsi que représenté schématiquement en figure 1, selon les techniques de combat pour ce type de projectile, le porteur volant en rase-motte se dirige vers la cible, le cap du porteur et du projectile étant maintenu vers celle-ci. Dès atteinte de la portée maximale indiquée, le pilote du porteur effectue une ressource. Le largage du projectile intervient dès que le porteur a atteint les conditions initiales requises, le projectile poursuit sa trajectoire vers la cible en balistique atmosphérique, selon les lois correspondantes parfaitement connues, compte tenu des conditions initiales précitées. Ce type de projectile est donc réservé aux missions tactiques en combat rapproché.

Toutefois, les moyens de détection électromagnétiques actuels sont de plus en plus performants et les attaques en vol en rase-motte deviennent dangereuses, la précision des moyens de riposte, tels que les missiles sol-air, étant elle-même de plus en plus grande, ce qui, bien entendu, permet d'augmenter la distance de confiance d'atteinte des porteurs précités.

La présente invention a pour objet essentiel la mise en oeuvre d'un procédé de guidage d'un projectile balistique et de projectiles balistiques guidés et propulsés aéroportés, dits projectiles intermédiaires, pour lesquels la portée, par rapport aux projectiles classiques précités, est augmentée de 40 % à 50 % dans des conditions comparables de précision d'impact sur la cible, ce qui permet d'augmenter en conséquence les conditions de sécurité du porteur de tels projectiles intermédiaires.

Un autre objet de la présente invention est la mise en oeuvre d'un procédé de guidage d'un projectile balistique et d'un projectile balistique aéroporté, guidé et propulsé pour lesquels les opérations habituellement nécessaires aux missiles de type air-sol sont supprimées.

Un autre objet de la présente invention est enfin la mise en oeuvre d'un procédé de guidage d'un projectile balistique et d'un projectile balistique aéroporté guidé et propulsé notoirement simplifié par rapport aux missiles classiques de type air-sol afin, notamment, de diminuer les coûts de mise en oeuvre et de fabrication correspondants.

Le procédé de guidage autonome vers une cible d'un projectile balistique aéroporté propulsé et animé d'une vitesse initiale, le projectile balistique, étant muni d'un système de navigation inertielle et de pilotage à centrale inertielle, est remarquable en ce qu'il consiste à associer au système de navigation et de pilotage, à partir de l'instant de largage du projectile balistique, un référentiel de départ non gravitationnel, ce référentiel de départ étant soumis à une loi de déplacement en balistique libre par rapport à un référentiel gravitationnel arbitraire lié à la cible. La loi de déplacement du projectile balistique est alors asservie à une loi de déplacement déterminée par rapport à la loi de déplacement en balistique libre du référentiel de départ et par rapport à ce même référentiel de départ pour constituer, pour le projectile balistique précité, une loi de déplacement en balistique guidée.

Le système de guidage autonome vers une cible d'un projectile balistique aéroporté et propulsé animé d'une vitesse initiale selon l'invention, ce système, comportant un système de navigation comprenant une centrale inertielle et des circuits actionneurs des organes de direction du projectile balistique, est remarquable en ce qu'il comporte en outre des moyens de détection de l'instant de largage du projectile balistique délivrant dès le largage de ce dernier un signal de référence de temps et des moyens d'initialisation recevant ledit signal de référence de temps et permettant de délivrer à ladite centrale inertielle un signal d'initialisation pour constituer un référentiel de départ non gravitationnel ; des moyens sont prévus permettant d'effectuer un asservissement de la loi de déplacement du projectile balistique à une loi de déplacement déterminée par rapport à la loi de déplacement en balistique libre du référentiel de départ et par rapport à ce même référentiel de départ pour constituer pour le projectile balistique une loi de déplacement en balistique guidée.

L'invention sera mieux comprise à la lecture de la description et à l'observation des dessins dans lesquels outre la figure 1, relative à l'art antérieur,

. la figure 2a représente un schéma illustratif de la mise en oeuvre du procédé objet de l'invention,

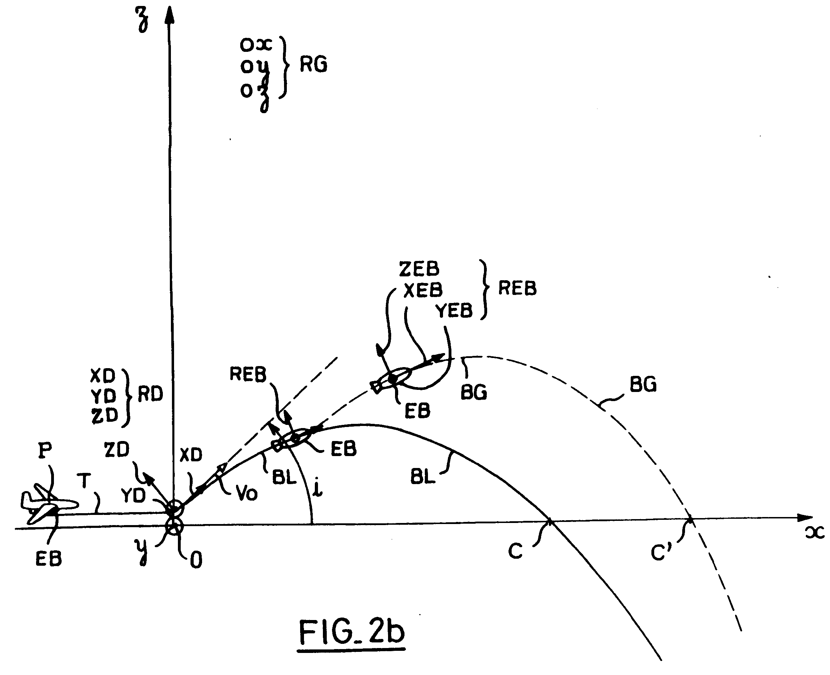

. la figure 2b représente un schéma illustratif de la mise en oeuvre du procédé objet de l'invention dans une variante selon laquelle le projectile balistique EB est soumis à une balistique guidée sur une partie de son trajet seulement,

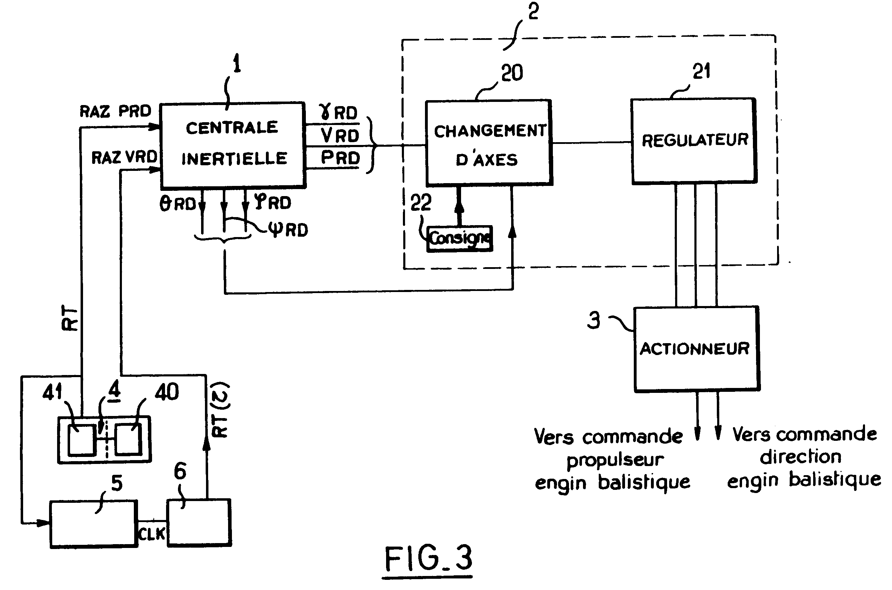

. la figure 3 représente un schéma synoptique d'un système de guidage d'un projectile balistique aéroporté propulsé conformément au procédé objet de la présente invention.

Une description plus détaillée du procédé de guidage autonome vers une cible d'un projectile balistique aéroporté propulsé, animé d'une vitesse initiale conformément à l'objet de l'invention, sera donnée en liaison avec la figure 2a.

Ainsi que décrit en liaison avec la figure 1, le porteur, noté P, suit un trajet T dont le cap est dirigé vers une cible C'.

Dès l'atteinte par le porteur P d'un point correspondant à la portée du projectile balistique EB en balistique guidé BG, ainsi que représenté en figure 2a, le pilote du porteur P effectue une ressource semblable à celle précédemment décrite en figure 1, le porteur P étant soumis à un vol ascensionnel sous incidence i de l'ordre de 45°.

Bien entendu, le projectile balistique EB est ainsi animé d'une vitesse initiale, notée VO, et comporte un système de navigation et de pilotage comprenant une centrale inertielle.

Conformément à une caractéristique avantageuse du procédé, objet de l'invention, dès l'atteinte d'une valeur de vitesse initiale VO pour un site convenable, le calculateur de bord du porteur P permet d'assurer immédiatement le largage du projectile balistique EB.

Conformément à une caractéristique avantageuse du procédé, objet de l'invention, celui-ci consiste alors à associer au système de navigation et de pilotage du projectile balistique EB, à partir de l'instant de largage du projectile balistique précité, un référentiel de départ, noté RD, non gravitationnel.

Pour les besoins de la représentation sur la figure 2a, on notera que l'instant de largage du projectile balistique est noté O et que, dès cet instant, est associé à l'ensemble constitué par le porteur P, la cible C' située au sol et le sol lui-même, un référentiel gravitationnel arbitraire, noté RG, dont les coordonnées sont représentées par Ox, Oy et Oz sur la figure 2a.

Le référentiel gravitationnel précité peut ainsi arbitrairement comporter son origine au sol à la verticale du point de largage, le point de largage n'excédant pas en altitude par rapport au sol une centaine de mètres, l'axe Ox étant dirigé selon le cap du porteur P vers la cible C' et les axes Oy et Oz constituant un référentiel rectangulaire orthonormé par exemple.

Selon une caractéristique du procédé objet de l'invention, le référentiel de départ RD non gravitationnel est soumis à une loi de déplacement en balistique libre, notée BL, par rapport au référentiel gravitationnel arbitraire RG lié à la cible C' précitée.

Bien entendu, on comprendra que la loi de déplacement en balistique libre BL du référentiel de départ RD non gravitationnel est choisie de façon à correspondre au déplacement en balistique libre d'un projectile balistique fictif.

Selon une autre caractéristique du procédé objet de l'invention, celui-ci consiste alors à asservir la loi de déplacement du projectile balistique EB à une loi de déplacement déterminée par rapport à la loi de déplacement en balistique libre BL du référentiel de départ RD et par rapport à ce même référentiel de départ pour constituer pour le projectile balistique EB précité une loi de déplacement en balistique guidée BG.

On comprendra ainsi que le procédé de guidage autonome vers une cible d'un projectile balistique aéroporté propulsé, objet de l'invention, permet d'assurer le guidage du projectile balistique précité vers son but par asservissement sur une loi prédéterminée de l'évolution de ce dernier en particulier de la position $\Delta P$ de celui-ci dans le référentiel de départ RD.

En fait, le procédé objet de la présente invention revient à imposer une balistique artificielle au projectile balistique précité.

La loi prédéterminée d'évolution de position du projectile balistique sert alors de consigne pour l'asservissement de guidage, ce qui permet de maîtriser les conditions de lancement du projectile balistique EB par une relation

$$\vec{VO} = f\,(\overrightarrow{\Delta P},\ \vec{Pd},\ \vec{Pb})$$

Dans cette relation, $\vec{Pd}$ est la position de lancement et $\vec{Pb}$ est la position du but ou cible C'.

Selon une autre caractéristique avantageuse du procédé de guidage objet de l'invention, le référentiel de

EP 0 420 760 B1

départ RD est défini dès l'instant de largage, noté O, du projectile balistique EB par les composantes d'attitude du porteur P et, bien entendu, du projectile balistique EB, étant entendu qu'au moment du largage le projectile balistique et le porteur P précédemment liés mécaniquement occupent la même position ou attitude.

Le référentiel RD est alors avantageusement défini, les composantes d'attitude du projectile balistique délivrées par la centrale inertielle étant initialisées à zéro pour définir le référentiel de départ.

Ainsi, l'initialisation consiste à attribuer aux composantes d'attitude XD, YD, ZD du projectile balistique au moment du largage la valeur zéro précitée, ainsi que par exemple une initialisation à zéro des paramètres de vitesse et de position.

Selon une variante avantageuse du procédé objet de l'invention, le référentiel de départ RD peut être défini après une durée de retard $\tau$ prédéterminée à compter de l'instant de largage O du projectile balistique EB, l'attitude du projectile balistique EB étant alors définie après quelques instants de déplacement ou vol non propulsé par calage sur l'axe aérodynamique du projectile balistique EB. Les composantes de vitesse du projectile balistique précité étant sensiblement égales à celles du porteur à l'instant de largage en l'absence de propulsion du projectile balistique précité, ces composantes de vitesse délivrées par la centrale inertielle équipant le projectile balistique sont alors initialisées à zéro pour définir le référentiel de départ RD. Par convention, les composantes de vitesse sont notées, lors de l'initialisation, $\overset{\bullet}{XD} = 0$, $\overset{\bullet}{YD} = 0$, $\overset{\bullet}{ZD} = 0$.

Bien entendu, l'initialisation peut également consister à initialiser à la valeur O les paramètres de position et d'attitude après le retard $\tau$ précité.

Selon une autre caractéristique avantageuse du procédé objet de l'invention, l'asservissement du projectile balistique EB à une loi de déplacement déterminée par rapport à la loi de déplacement en balistique libre BL du référentiel de départ RD et par rapport à ce même référentiel de départ peut être effectué par application comme grandeur de consigne d'une valeur de déplacement déterminée pour une ou plusieurs composantes dans le référentiel de départ RD.

Le projectile balistique EB est ainsi soumis à une loi de déplacement selon une balistique guidée BG par rapport à la loi de déplacement théorique en balistique libre BL du référentiel de départ RD.

Ainsi qu'on l'a représenté en figure 2a, le porteur P ayant acquis préalablement au largage du projectile balistique EB l'angle de cap de trajet T précédemment mentionné correspondant à celui de la cible C' à atteindre, la valeur de déplacement déterminée correspond à une valeur de déplacement $\overrightarrow{O'C'}$ dont la direction est parallèle à la direction de l'axe du référentiel de départ orienté vers la cible C' dans la direction de cap du porteur P et dont l'amplitude $|\overrightarrow{O'C'}|$ correspond à la mesure de distance des points correspondants sur la trajectoire en balistique libre BL du référentiel du départ RD et sur la trajectoire du projectile balistique EB en trajectoire de balistique guidée BG.

On comprendra ainsi qu'en raison de la définition en mode relatif de la loi de déplacement du projectile balistique EB en balistique guidée BG par rapport à une même balistique libre BL, ainsi que représenté en figure 2a, pour atteindre le point C', il suffit donc de provoquer au cours du vol une consigne de déplacement $\overrightarrow{O'C'}$ ou loi de déplacement précitée, laquelle s'exprime simplement dans le trièdre de départ RD par les composantes :

$$\overrightarrow{O'C'} \ (O'C', O, O)$$

On voit ainsi qu'il est uniquement nécessaire de guider le projectile balistique selon la loi précitée. Une telle loi nécessite simplement la connaissance du référentiel de départ RD puis l'asservissement des organes de commande de direction et de propulsion du projectile balistique EB sur la loi de déplacement précitée.

Le calcul de la position absolue du projectile balistique peut s'exprimer de la manière ci-après, soit :

$$\overrightarrow{\gamma}_a = \overrightarrow{A} + \overrightarrow{\varphi}$$

$\overrightarrow{\gamma}_a$ : accélération absolue.

$\overrightarrow{\varphi}$ : champ de gravitation.

$\overrightarrow{A}$ : accélération non gravitationnelle (mesurée par la centrale inertielle).

soit : $\overrightarrow{VO}$ la vitesse initiale maîtrisée par le dispositif de lancement ou porteur.
Le calcul de la vitesse du projectile balistique s'écrit :

4

$$\vec{V} = \vec{VO} + \int_0^+ \vec{\gamma}_a \, dt = \vec{VO} + \int_0^+ \vec{Adt} + \int_0^t \vec{\varphi} \, dt.$$

Le calcul de la position du projectile balistique s'écrit :

$$\vec{M} = \vec{MO} + \int_0^t \vec{V} dt = \left[ \vec{MO} + \vec{VO} \, t + \iint_0^+ \vec{\varphi dt} \right] + \left[ \iint_0^t \vec{A} \, dt \right] = \vec{\Delta P1} + \vec{\Delta P}.$$

Le système de lancement ou porteur P peut donc calculer $\vec{M}$ car il connaît $\vec{VO}$, $\vec{\varphi}$ et $\vec{\Delta P}$.

En effet $\vec{\Delta P}$ peut être connu a priori car ce paramètre est donné par le dispositif de guidage du projectile balistique EB.

Le porteur peut donc, connaissant $\vec{M}$ ajuster $\vec{VO}$.

Pour guider un engin balistique propulsé et animé d'une vitesse initiale $\vec{VO}$, il suffit donc de piloter dans les axes projectile uniquement sur des accélérations non gravitationnelles, donc sans références externes.

Dans l'équation (C)

$\vec{\Delta P1}$ est calculé par le lanceur ou porteur,

$\vec{\Delta P}$ est connu par le lanceur ou porteur et obtenu par le système de pilotage du projectile balistique.

La loi de pilotage doit être optimisée pour minimiser les erreurs et faciliter la réalisation de l'asservissement, ainsi qu'il sera décrit ultérieurement dans la description, en particulier le choix de la consigne d'asservissement $\vec{\Delta P}_C$ = (cst, O,O) paraît très intéressant.

Selon une première caractéristique avantageuse du procédé objet de l'invention, le projectile balistique EB est soumis à un déplacement en balistique guidée BG sensiblement sur la totalité de sa trajectoire de déplacement jusqu'à la cible C'.

Le déplacement en balistique guidée BG pour l'engin balistique EB intervient ainsi soit lors de l'initialisation par remise à zéro des composantes de position ou d'attitude délivrées par la centrale inertielle du projectile à l'intant du largage O, soit après le retard τ précité, ce retard τ pouvant au plus être pris égal à 1 seconde par exemple.

Dans ces conditions, le déplacement du projectile balistique EB en balistique guidée BG est effectué, ainsi que représenté en figure 2a, sensiblement sur la totalité de la trajectoire de déplacement jusqu'à la cible C' précitée.

Selon une autre caractéristique avantageuse du procédé objet de l'invention, le projectile balistique EB est soumis à un déplacement en balistique guidée BG sur une partie de sa trajectoire de déplacement jusqu'à la cible C'.

On comprendra ainsi qu'après l'instant de largage O, tel que représenté sur la figure 2b, le projectile balistique EB est soumis en premier lieu, en l'absence de toute propulsion et de toute commande sur les organes de guidage, à un premier trajet en balistique atmosphérique ou libre BL, le référentiel de départ RD étant alors lié à un référentiel géométrique du projectile balistique EB, ce référentiel géométrique étant noté sur la figure 2b REB par exemple.

En fin de trajet en balistique libre BL, le projectile balistique est ensuite soumis à une balistique guidée BG, le propulseur de l'engin balistique EB étant mis en fonctionnement à partir d'un instant prédéterminé, à partir des valeurs de vitesse par exemple du projectile balistique dès la mise en fonctionnement de la propulsion, conformément aux procédures précédemment décrites dans la description dans le cas où le projectile balistique EB est soumis à une balistique guidée BG sur la totalité ou la quasi-totalité de son trajet de déplacement jusqu'à la cible C'.

Une description plus détaillée d'un système de guidage autonome vers une cible d'un projectile balistique aéroporté propulsé, animé d'une vitesse initiale VO, sera donnée en liaison avec la figure 3.

Conformément à la figure précitée, et ainsi que représenté sur celle-ci, le système selon l'invention comporte un système de navigation comprenant une centrale inertielle 1 et des circuits actionneurs 3 des organes de guidage et de propulsion du projectile balistique EB. Les circuits actionneurs 3 des organes de guidage et de propulsion du projectile balistique EB ne seront pas décrits. En effet, le projectile balistique EB peut, de manière classique, être muni de propulseurs à jet de gaz par exemple, les circuits actionneurs de ces propulseurs à jet de gaz utilisés soit pour la propulsion , soit pour le guidage du projectile balistique EB étant des circuits actionneurs de type classique. En tant que tel, ces circuits ne seront pas décrits.

Ainsi qu'on l'a en outre représenté en figure 3, le système de guidage autonome, objet de l'invention, comporte en outre des moyens 2 d'asservissement de la loi de déplacement du projectile balistique EB à une loi de déplacement déterminée par rapport à la loi de déplacement en balistique libre BL du référentiel de départ RD et par rapport à ce référentiel de départ.

Le système de guidage, selon l'invention, comporte également des moyens 4 de détection de l'instant de largage O du projectile balistique délivrant dès l'instant de largage précité de celui-ci un signal de référence de temps, noté RT sur la figure 3.

Des moyens d'initialisation reçoivent le signal de référence de temps RT et permettent de délivrer à la centrale inertielle 1 un signal d'initialisation pour constituer un référentiel de départ RD non gravitationnel.

De manière classique, la centrale inertielle 1 peut être constituée par une centrale inertielle tri-axes délivrant notamment les composantes d'attitude du projectile balistique, noté $\theta$RD, $\Upsilon$RD, $\varphi$RD, ainsi que les composantes d'accélération du projectile balistique $\gamma$RD, de vitesse du projectile balistique VRD et de position PRD du projectile balistique EB dans le référentiel de départ RD. Ce type de centrale inertielle ne sera pas décrit en détail car il correspond à un type de centrale inertielle classique connue de l'homme de l'art.

Ainsi qu'on l'a en outre représenté en figure 3, les moyens 2 d'asservissement comportent un pilote automatique comprenant un dispositif 20 de changement d'axes recevant d'une part, les composantes d'attitude $\theta$RD, $\Upsilon$RD et $\varphi$RD du projectile balistique EB par rapport au référentiel de départ RD et, d'autre part, les paramètres d'accélération $\gamma$RD, de vitesse VRD et de position PRD du projectile balistique par rapport au référentiel de départ RD.

Le dispositif 20 de changement d'axes délivre les valeurs d'écarts de position du référentiel de départ RD et d'un référentiel REB lié au projectile balistique EB, tel que le référentiel géométrique précédemment mentionné dans la description. Le pilote automatique 2 comporte également des moyens régulateurs 21 recevant les valeurs d'écarts délivrées par le dispositif 20 de changement d'axes et délivre ensuite des ordres de commande aux circuits actionneurs 3 des organes de direction du projectile balistique.

On comprendra ainsi que les moyens régulateurs 21, à partir des valeurs d'écarts délivrées par le dispositif 20 de changement d'axes, ces écarts représentant les valeurs d'écarts des paramètres dynamiques du projectile balistique par rapport à la consigne de déplacement délivrée par un circuit 22 au système de changement d'axes 20, valeurs d'écarts exprimées par rapport au référentiel géométrique REB du projectile balistique EB, permettent de délivrer les ordres de commande aux circuits actionneurs 3, ces ordres de commande consistant en des paramètres de valeurs exprimés dans le référentiel géométrique REB lié au projectile balistique EB.

On notera que le circuit générateur de consigne 22 délivre avantageusement la loi de consigne de déplacement précédemment exprimée dans la description par la relation B.

On comprendra, bien sûr, en particulier que cette loi de consigne peut être délivrée à l'aide de circuits numériques par exemple, les valeurs numériques correspondantes étant ainsi superposées aux valeurs de position PRD reçues par le système de changement d'axes 20 au moyen de tout circuit sommateur correspondant.

Bien entendu, et dans le cadre de l'application spécifique correspondant, la valeur du paramètre O'C' est déterminée de façon que la portée réelle du projectile balistique guidé conformément à l'objet de la présente invention soit amenée de la valeur OC en balistique libre BL sur la figure 2a à la valeur OC', après augmentation de la valeur CC', conformément au procédé de guidage objet de la présente invention.

Bien entendu, toute loi de consigne de déplacement différente peut être envisagée, mais les valeurs O'C' représentées en figure 2a ou 2b sont calculées, compte tenu de la vitesse initiale VO du porteur et du projectile balistique EB pour une incidence de 45° de ces derniers.

Selon le mode de réalisation avantageux représenté en figure 3 du système de guidage, objet de l'invention, les moyens de détection de l'instant de largage O comportent avantageusement un interrupteur de largage 40 sensible au phénomène de largage proprement dit du projectile balistique par le porteur P.

Cet interrupteur de largage peut être par exemple un interrupteur à actionnement magnétique, lequel, lors du largage, permet de fermer un circuit correspondant.

En outre, les moyens de détection de l'instant de largage O comportent avantageusement un déclencheur rapide 41 permettant, sur commutation de l'interrupteur de largage 40, d'engendrer une impulsion constituant le signal de référence de temps RT précité.

On comprendra ainsi que le déclencheur rapide 41 peut être une bascule de type bistable permettant, sur fermeture de l'interrupteur 40 par transition à un état stable, d'engendrer l'impulsion constituant le signal de référence de temps RT précité.

En outre, ainsi que représenté également en figure 3, les moyens de détection de l'instant de largage O peuvent comporter une base de temps, notée 5, constituée par une horloge délivrant un signal d'horloge CLK à fréquence élevée, cette base de temps 5 étant suivie, connectée en cascade, par un moyen diviseur logique 6 dans un rapport n recevant le signal d'horloge CLK précité et permettant d'engendrer un signal retardé d'un retard déterminé $\tau$ pour constituer un signal de référence retardé, noté RT($\tau$).

Ainsi qu'on l'a en outre représenté en figure 3, le signal de référence de temps RT est délivré à l'entrée de remise à zéro, notée RAZPRD, des composantes d'attitude du projectile balistique délivré par la centrale inertielle 1 pour définir ainsi le référentiel de départ RD dès l'instant de largage O du projectile balistique.

De même, ainsi que représenté sur cette figure 3, le signal de référence de temps retardé RT($\tau$) est délivré à l'entrée de remise à zéro, notée RAZPRD des composantes de vitesse du projectile balistique de la centrale inertielle 1 pour définir ainsi le référentiel de départ RD après une durée de retard $\tau$ prédéterminée à compter de l'instant de largage du projectile balistique EB par rapport aux composantes instantanées de vitesse du projectile balistique sensiblement égales à celles du porteur à l'instant du largage O.

Les signaux précités permettent alors d'effectuer l'une ou l'autre des initialisations par exemple.

On a ainsi décrit un procédé et un système de guidage autonome vers une cible du projectile balistique aéroporté propulsé, animé d'une vitesse initiale, particulièrement intéressant dans la mesure où le procédé et le système précités ne nécessitent aucune référence extérieure au projectile balistique au cours de son déplacement.

On constatera en effet que tous les paramètres utiles nécessaires au guidage du projectile balistique sont mesurables par la centrale inertielle placée à bord du projectile balistique EB.

Bien entendu, le procédé et le système de guidage objets de l'invention peuvent être appliqués à tout type de projectiles dotés d'un dispositif de guidage et d'un pilote automatique en particulier sur les bombes propulsées.

On notera alors que le système et le procédé objets de l'invention sont équivalents à un dispositif annulant la traînée du projectile balistique précité.

Enfin, le procédé et le système objets de l'invention permettent d'accroître la portée réelle du projectile balistique de la quantité CC' sur les figures 2a et 2b, tout en utilisant le principe de lancement de projectiles balistiques non guidés et non propulsés pour lesquels la vitesse initiale VO est maîtrisée.

## Revendications

1. Procédé de guidage autonome vers une cible d'un projectile balistique (EB) aéroporté propulsé, animé d'une vitesse initiale (VO) et muni d'un système de navigation et de pilotage à centrale inertielle, caractérisé en en ce que ledit procédé consiste :
   - à associer au système de navigation et de pilotage, à partir de l'instant de largage dudit projectile balistique (EB) un référentiel de départ (RD) non gravitationnel, ledit référentiel de départ (RD) étant soumis à une loi de déplacement en balistique libre (BL) par rapport à un référentiel gravitationnel arbitraire (RG) lié à la cible,
   - à asservir la loi de déplacement dudit projectile balistique (EB) à une loi de déplacement déterminée par rapport à la loi de déplacement en balistique libre du référentiel de départ (RD) et par rapport à ce même référentiel de départ pour constituer, pour ledit projectile balistique (EB), une loi de déplacement en balistique guidée (BG).

2. Procédé selon la revendication 1, caractérisé en ce que ledit référentiel de départ (RD) est défini dès l'instant de largage (O) dudit projectile balistique (EB) par les composantes d'attitude du porteur (P) et du projectile balistique (EP), les composantes d'attitude dudit projectile balistique délivrées par ladite centrale inertielle étant initialisées à zéro pour définir ledit référentiel de départ (XO = O, YD = O, ZD = O), les composantes de vitesse et de position pouvant être également initialisées à la valeur zéro.

3. Procédé selon la revendication 1, caractérisé en ce que ledit référentiel de départ (RD) est défini après une durée de retard ($\tau$) prédéterminée à compter de l'instant de largage (O) dudit projectile balistique (EB), les composantes de vitesse dudit projectile balistique sensiblement égales à celles du porteur à l'instant de la largage, étant initialisées à zéro pour définir ledit référentiel de départ ($\dot{X}_D$=O, $\dot{Y}_D$=O, $\dot{Z}_D$=O), les composantes de position et d'attitude pouvant être initialisées à la valeur zéro après ce même retard $\tau$.

**4.** Procédé selon l'une des revendications 1 à 3, caractérisé en ce que l'asservissement dudit projectile balistique à une loi de déplacement déterminée par rapport à la loi de déplacement en balistique libre (BL) du référentiel de départ (RD) et par rapport à ce même référentiel de départ est effectué par application, comme grandeur de consigne, d'une valeur de déplacement déterminée pour une ou plusieurs composantes dans le référentiel de départ, ledit projectile balistique étant ainsi soumis à une loi de déplacement selon une balistique guidée (BG) par rapport à la loi de déplacement théorique en balistique libre (BL) dudit référentiel de départ (RD).

**5.** Procédé selon la revendication 4, caractérisé en ce que le porteur ayant acquis préalablement au largage dudit projectile balistique un angle de cap de trajet correspondant à celui de la cible à atteindre, ladite valeur de déplacement déterminée correspond à un vecteur déplacement $(\overrightarrow{O'C'})$ dont la direction est parallèle à la direction de l'axe du référentiel de départ orienté vers la cible (C') dans la direction de cap du porteur et dont l'amplitude $|\overrightarrow{O'C'}|$ correspond à la mesure de distance des points correspondants sur la trajectoire en balistique libre (BL) du référentiel de départ (RD) et sur la trajectoire du projectile balistique (EB) en trajectoire guidée (BG).

**6.** Procédé selon l'une des revendications précédentes, caractérisé en ce que le projectile balistique (EB) est soumis à un déplacement en balistique guidée (BG) sensiblement sur la totalité de sa trajectoire de déplacement jusqu'à la cible (C').

**7.** Procédé selon l'une des revendications 1 à 5 précédentes, caractérisé en ce que le projectile balistique (EB) est soumis à un déplacement en balistique guidée (BG) sur une partie de sa trajectoire de déplacement jusqu'à la cible (C').

**8.** Système de guidage autonome vers une cible d'un projectile balistique (EB) aéroporté propulsé animé d'une vitesse initiale (VO), ledit système comportant un système de navigation comprenant une centrale inertielle (1) et des circuits actionneurs (3) des organes de guidage dudit projectile balistique (EB), caractérisé en ce qu'il comporte en outre :
   - des moyens (2) d'asservissement de la loi de déplacement dudit projectile balistique (EB) à une loi de déplacement déterminée par rapport à la loi de déplacement en balistique libre (BL) du référentiel de départ (RD), et par rapport à ce même référentiel de départ, pour constituer pour ledit projectile balistique (EB) une loi de déplacement en balistique guidée (BG),
   - des moyens (4) de détection de l'instant de largage dudit projectile balistique délivrant dès l'instant le largage (O) dudit projectile balistique (EB) un signal de référence de temps (RT),
   - des moyens d'initialisation recevant ledit signal de référence de temps (RT) et permettant de délivrer à ladite centrale inertielle (1) un signal d'initialisation pour constituer un référentiel de départ (RD) non gravitationnel.

**9.** Système de guidage selon la revendication 8, caractérisé en ce que lesdits moyens (2) d'asservissement comportent un pilote automatique comprenant un dispositif (20) de changement d'axes recevant d'une part, les composantes d'attitude ($\theta$RD, $\Upsilon$RD, $\phi$RD) du projectile balistique (EB) par rapport audit référentiel de départ (RD) et, d'autre part, les paramètres d'accélération ($\gamma$RD), de vitesse (VRD) et de position (PRD) dudit projectile balistique par rapport audit référentiel de départ (RD), ledit dispositif (20) de changement d'axes délivrant les valeurs écarts de position du référentiel de départ et d'un référentiel (REB) lié audit projectile balistique (EB), ledit pilote automatique (2) comportant en outre des moyens régulateurs (21) recevant lesdites valeurs d'écarts délivrées par ledit dispositif (20) de changement d'axes et délivrant des ordres de commande auxdits circuits actionneurs (3) des organes de direction du projectile balistique.

**10.** Système de guidage selon l'une des revendications 8 ou 9, caractérisé en ce que lesdits moyens de détection de l'instant de largage (O) comportent :
   - un interrupteur de largage (40) sensible au phénomène de largage proprement dit du projectile balistique par le porteur,
   - un déclencheur rapide (41) permettant, sur commutation dudit interrupteur de largage, d'engendrer une impulsion constituant ledit signal de référence de temps.

**11.** Système selon l'une des revendications 8 à 10, caractérisé en ce qu'il comporte en outre :

- une base de temps (5) délivrant un signal d'horloge (CLK),
- un moyen diviseur logique (6) dans un rapport n recevant ledit signal d'horloge (CLK) et permettant d'engendrer un signal retardé d'un retard déterminé ($\tau$) pour constituer un signal de référence de temps retardé.

**12.** Système selon la revendication 10, caractérisé en ce que ledit signal de référence de temps (RT) est délivré à l'entrée de remise à zéro (RAZ PRD) des composantes d'attitude du projectile balistique de la centrale inertielle (1) pour définir ainsi ledit référentiel de départ (RD) dès l'instant de largage (O) dudit projectile balistique (EB) par les composantes d'attitudes correspondantes du porteur et du projectile balistique (EB).

**13.** Système selon la revendication 11, caractérisé en ce que ledit signal de référence de temps retardé (RT($\tau$)) est délivré à l'entrée de remise à zéro (RAZ VRD) des composantes de vitesse du projectile balistique de la centrale inertielle (1) pour définir ainsi ledit référentiel de départ (RD) après une durée de retard ($\tau$) prédéterminée à compter de l'instant de largage dudit projectile balistique (EB) par rapport aux composantes instantanées de vitesse du projectile balistique sensiblement égales à celles du porteur à l'instant du largage.


**Patentansprüche**

**1.** Verfahren zum selbständigen Führen eines ballistischen Luftabwurfprojektils (EB) zu einem Ziel, das mit einer Anfangsgeschwindigkeit (VO) angetrieben wird und mit einem Trägheits-Navigations- und Steuerungssystem versehen ist, dadurch gekennzeichnet, daß dieses Verfahren darin besteht, daß
- dem Navigations- und Steuerungssystem ab dem Zeitpunkt des Abwurfes des ballistischen Projektils (EB) ein gravitationsloses Abwurfbezugssystem (RD) zugeordnet wird, welches Abwurfbezugssystem (RD) einem freien ballistischen Bewegungsgesetz (BL) bezüglich eines willkürlichen Gravitationsbezugssystems (RG) unterworfen wird, das mit dem Ziel verbunden ist,
- das Bewegungsgesetz des ballistischen Projektils (EB) einem bestimmten Bewegungsgesetz bezüglich des freien ballistischen Bewegungsgesetzes des Abwurfbezugssystems (RD) und bezüglich des Abwurfbezugssystems selbst unterworfen wird, um für das ballistische Projektil (EB) ein ballistisches Führungsbewegungsgesetz (BG) zu bilden.

**2.** Verfahren nach Anspruch 1, dadurch gekennzeichnet, daß das Abwurfbezugssystem (RD) zum Zeitpunkt des Abwurfs (O) des ballistischen Projektils (EB) durch die Komponenten der Fluglage des Trägers (P) und des ballistischen Projektils (EP) bestimmt wird, wobei die Komponenten der Fluglage des ballistischen Projektils, die vom Trägheitsnavigationsleitwerk kommen, auf Null initialisiert werden, um das Abwurfbezugssystem zu bestimmen (XD = 0, YD = 0, ZD = 0), und die Komponenten der Geschwindigkeit und der Position gleichfalls auf den Wert Null initialisiert werden können.

**3.** Verfahren nach Anspruch 1, dadurch gekennzeichnet, daß das Abwurfbezugssystem (RD) nach einer bestimmten Verzögerungszeit ($\tau$) ab dem Zeitpunkt des Abwurfes (O) des ballistischen Projektils (EB) bestimmt wird, die Komponenten der Geschwindigkeit des ballistischen Projektils, die im wesentlichen gleich denen des Trägers zum Zeitpunkt des Abwurfes sind, auf Null initialisiert werden, um das Abwurfbezugssystem zu bestimmen (XD = 0, YD = 0, ZD = 0), und die Komponenten der Position und der Fluglage nach derselben Verzögerungszeit $\tau$ gleichfalls auf den Wert Null initialisiert werden können.

**4.** Verfahren nach einem der Ansprüche 1 bis 3, dadurch gekennzeichnet, daß das Unterwerfen des ballistischen Projektils einem bezüglich des freien ballistischen Bewegungsgesetzes (BL) des Abwurfbezugssystems (RD) und bezüglich des Abwurfbewegungssystems selbst bestimmten Bewegungsgesetz dadurch bewirkt wird, daß als Sollwert ein Bewegungswert verwandt wird, der für eine oder mehrere Komponenten im Abwurfbezugssystem bestimmt ist, und das ballistische Projektil einem ballistisch geführten Bewegungsgesetz (BG) bezüglich des freien theoretischen ballistischen Bewegungsgesetzes (BL) des Abwurfbezugssystems (RD) unterworfen wird.

**5.** Verfahren nach Anspruch 4, dadurch gekennzeichnet, daß der Träger vor dem Abwurf des ballistischen Projektils einen Winkel der Bahnkurve ermittelt hat, die dem zu erreichenden Ziel entspricht, wobei der bestimmte Bewegungswert einem Bewegungsvektor $\overrightarrow{O'C'}$ entspricht, dessen Richtung parallel zur Richtung der Achse des Abwurfbezugssystems liegt, die auf das Ziel (C') in der Richtunq der Bahnkurve des Trägers gerichtet ist, und dessen Wert dem Maß $\mid$ $\overrightarrow{O'\quad C'}$ $\mid$ dem Maß des Abstandes der entsprechenden Punkte auf der freien ballistischen Bahn (BL) des Abwurfbezugssystems (RD) und auf der geführten Bahn (BG) des ballistischen Projektils (EB) entspricht.

6. Verfahren nach einem der vorhergehenden Ansprüche, dadurch gekennzeichnet, daß das ballistische Projektil (EB) einer ballistisch geführten Bewegung (BG) im wesentlichen über die gesamte Bewegungsbahn bis zum Ziel (C') unterworfen wird.

7. Verfahren nach einem der vorhergehenden Ansprüche 1 bis 5, dadurch gekennzeichnet, daß das ballistische Projektil (EB) einer ballistisch geführten Bewegung (BG) über einen Teil seiner Bewegungsbahn bis zum Ziel (C') unterworfen wird.

8. System zum selbständigen Führen eines Luftabwurfprojektils (EB) zu einem Ziel, das mit einer Anfangsgeschwindigkeit (VO) angetrieben wird, welches System ein Navigationssystem, das ein Trägheitsnavigationsleitwerk (1) umfaßt, und Betätigungsschaltungen (3) für die Lenkorgane des ballistischen Projektils (EB) aufweist, dadurch gekennzeichnet, daß es weiterhin
   - Einrichtungen (2) zum Unterwerfen des Bewegungsgesetzes des ballistischen Projektils (EB) einem bezüglich des freien ballistischen Bewegungsgesetzes (BL) des Abwurfbezugssystems (RB) und bezüglich des Abwurfbezugssystems selbst bestimmten Bewegungsgesetz, um für das ballistische Projektil (EB) ein geführtes ballistisches Bewegungsgesetz (BG) zu bilden,
   - Einrichtung (4) zum Ermitteln des Zeitpunktes des Abwurfes des ballistischen Projektils, die zum Zeitpunkt des Abwurfes (O) des ballistischen Projektils (EB) ein Zeitbezugssignal (RT) abgeben, und
   - Inititialisierungseinrichtungen aufweist, die das Zeitbezugssignal (RT) empfangen und an das Trägheitsnavigationsleitwerk (1) ein Initialisierungssignal abgeben können, um ein gravitationsloses Abwurfbezugssystem (RD) zu bilden.

9. System zum Führen nach Anspruch 8, dadurch gekennzeichnet, daß die Unterwerfungseinrichtungen (2) einen Autopiloten aufweisen, der eine Einrichtung (20) zum Ändern der Achsen umfaßt, und einerseits die Komponenten der Fluglage ($\theta$RD, $\psi$RD, $\phi$RD) des ballistischen Projektils (EB) bezüglich des Abwurfbezugssystems (RD) und andererseits die Parameter der Beschleunigung ($\gamma$RD), der Geschwindigkeit (VRD) und der Position (PRD) des ballistischen Projektils bezüglich des Abwurfbezugssystems (RD) empfangen, welche Einrichtung (20) zum Ändern der Achsen die Werte der Positionsabweichung des Abwurfbezugssystems und eines Bezugssystems (REB) liefert, das mit dem ballistischen Projektil (EB) verbunden ist, und der Autopilot (2) weiterhin Reguliereinrichtungen (21) umfaßt, die die Abweichungswerte von der Einrichtung (20) zum Ändern der Achsen empfangen und den Betätigungsschaltungen (3) der Lenkorgane des ballistischen Projektils Steuerbefehle geben.

10. System zum Führen nach einem der Ansprüche 8 oder 9, dadurch gekennzeichnet, daß die Einrichtungen zum Ermitteln des Zeitpunktes des Abwurfes (O)
   - einen Abwurfunterbrecher (40), der auf den eigentlichen Abwurf des ballistischen Projektils vom Träger anspricht, und
   - einen Schnellauslöser (41) umfassen, der auf die Umschaltung des Abwurfunterbrechers einen Impuls erzeugen kann, der das Zeitbezugssignal darstellt.

11. System nach einem der Ansprüche 8 bis 10, dadurch gekennzeichnet, daß es weiterhin
   - eine Zeitbasis (5), die ein Taktsignal (CLK) ausgibt, und
   - eine logische Teilereinrichtung (6) in einem Verhältnis n umfaßt, die das Taktsignal (CLK) empfängt und ein um eine bestimmte Verzögerungszeit ($\tau$) verzögertes Signal erzeugen kann, um ein verzögertes Zeitbezugssignal zu bilden.

12. System nach Anspruch 10, dadurch gekennzeichnet, daß das Zeitbezugssignal (RT) am Rücksetzeingang (RAZ PRD) der Komponenten der Fluglage des ballistischen Projektils des Trägheitsnavigationsleitwerks (1) liegt, um das Abwurfbezugssystem (RD) zum Zeitpunkt des Abwurfes (O) des ballistischen Projektils (EB) aus den Komponenten der Fluglage zu bilden, die dem Träger und dem ballistischen Projektil (EB) entsprechen.

13. System nach Anspruch 11, dadurch gekennzeichnet, daß das verzögerte Zeitbezugssignal (RT($\tau$)) am

Rücksetzeingang (RAZ VRD) der Komponenten der Geschwindigkeit des ballistischen Projektils des Trägheitsnavigationswerks (1) liegt, um das Abwurfbezugssystem (RD) nach einer bestimmten Verzögerungszeit (τ) ab dem Abwurf des ballistischen Projektils (EB) bezüglich der Anfangskomponenten der Geschwindigkeit des ballistischen Projektils zu bestimmen, die im wesentlichen gleich denen des Trägers zum Zeitpunkt des Abwurfes sind.

## Claims

1. Method for self-contained guidance, towards a target, of a propelled, airborne ballistic projectile (EB), given an initial speed (VO) and equipped with a navigation and piloting system with an inertial unit, characterized in that the said method consists:
   - in associating with the navigation and piloting system, from the instant of release of the said ballistic projectile (EB), a non-gravitational launch reference system (RD), the said launch reference system (RD) being subjected to a displacement law in free ballistic mode (BL) with respect to an arbitrary gravitational reference system (RG) related to the target,
   - in slaving the displacement law of the said ballistic projectile (EB) to a displacement law defined with respect to the displacement law in free ballistic mode of the launch reference system (RD) and with respect to this same launch reference system, in order to constitute a displacement law, for the said ballistic projectile (EB), in guided ballistic mode (BG).

2. Method according to Claim 1, characterized in that the said launch reference system (RD) is defined as from the instant of release (O) of the said ballistic projectile (EB) by the attitude components of the carrier (P) and of the ballistic projectile (EP), the attitude components of the said ballistic projectile delivered by the said inertial unit being initialized to zero in order to define the said launch reference system (XO = O, YD = O, ZD = O), the speed and position components also possibly being initialized at the value zero.

3. Method according to Claim 1, characterized in that the said launch reference system (RD) is defined after a predetermined time delay (τ), counting from the instant of release (O) of the said ballistic projectile (EB), the speed components of the said ballistic projectile substantially equal to those of the carrier at the instant of release, being initialised to zero in order to define the said launch reference system ($\dot{X}D = O$, $\dot{Y}D = O$, $\dot{Z}D = O$), the position and attitude components possibly also being initialized to the value zero after this same delay τ.

4. Method according to one of Claims 1 to 3, characterized in that the slaving of the said ballistic projectile to a displacement law defined with respect to the displacement law in free ballistic mode (BL) of the launch reference system (RD) and with respect to this same launch reference system is performed by application, as datum magnitude, of a displacement value determined for one or more components in the launch reference system, the said ballistic projectile thus being subjected to a displacement law according to a guided ballistic mode (BG) with respect to the theoretical displacement law in free ballistic mode (BL) of the said launch reference system (RD).

5. Method according to Claim 4, characterized in that the carrier, prior to the release of the said ballistic projectile, having acquired a flight heading angle corresponding to that of the target to be hit, the said defined displacement value corresponds to a displacement vector ($\overrightarrow{O'\,C'}$), the direction of which is parallel to the direction of the axis of the launch reference system turned towards the target (C') in the heading direction of the carrier, and the amplitude $\left| \overrightarrow{O'\,C'} \right|$ of which corresponds to the distance measurement of the corresponding points on the trajectory in free ballistic mode (BL) of the launch reference system (RD) and on the trajectory of the ballistic projectile (EB) in guided trajectory mode (BG).

6. Method according to one of the preceding claims, characterized in that the ballistic projectile (EB) is subjected to a displacement in guided ballistic mode (BG) substantially over the whole of its displacement trajectory up to the target (C').

7. Method according to one of the preceding Claims 1 to 5, characterized in that the ballistic projectile (EB) is subjected to a displacement in guided ballistic mode (BG) over part of its displacement trajectory up to the target (C′).

8. System for self-contained guidance, towards a target, of a propelled, airborne ballistic projectile (EB) given an initial speed (VO), the said system including a navigation system comprising an inertial unit (1) and circuits (3) for activating the guidance members of the said ballistic projectile (EB), characterized in that it further includes:
   - means (2) for slaving the displacement law of the said ballistic projectile (EB) to a displacement law determined with respect to the displacement law in free ballistic mode (BL) of the launch reference system (RD), and with respect to this same launch reference system, so as to constitute a displacement law for the said ballistic projectile (EB) in guided ballistic mode (BG),
   - means (4) for detecting the instant of release of the said ballistic projectile, delivering a time reference signal (RT) as from the instant of release (O) of the said ballistic projectile (EB),
   - initialization means receiving the said time reference signal (RT) and making it possible to deliver an initialization signal to the said inertial unit (1) in order to constitute a non-gravitational launch reference system (RD).

9. Guidance system according to Claim 8, characterized in that the said slaving means (2) include an automatic pilot comprising an axis-changing device (20), receiving, on the one hand, the attitude components ($\Theta$RD, $\tau$RD, $\psi$RD) of the ballistic projectile (EB) with respect to the said launch reference system (RD) and, on the other hand, the acceleration ($\gamma$RD), speed (VRD) and position (PRD) parameters of the said ballistic projectile with respect to the said launch reference system (RD), the said axis-changing device (20) delivering the position offset values of the launch reference system and of a reference system (REB) related to the said ballistic projectile (EB), the said automatic pilot (2) further including regulator means (21) receiving the said offset values delivered by the said axis-changing device (20) and delivering control commands to the said circuits (3) for actuating the steering members of the ballistic projectile.

10. Guidance system according to one of Claims 8 or 9, characterized in that the said release instant detection means (O) include:
   - a release switch (40) sensitive to the phenomenon of release proper of the ballistic projectile by the carrier,
   - a fast trigger switch (41) making it possible, upon changeover of the said release switch, to generate a pulse constituting the said time reference signal.

11. System according to one of Claims 8 to 10, characterized in that it further includes:
   - a time base (5) delivering a clock signal (CLK),
   - a logic divider means (6) in a ratio n receiving the said clock signal (CLK) and making it possible to generate a signal delayed by a defined delay ($\tau$) so as to constitute the delayed time reference signal.

12. System according to Claim 10, characterized in that the said time reference signal (RT) is delivered to the input (RAZ PRD) of the inertial unit (1) for resetting to zero the ballistic projectile attitude components, in order thus to define the said launch reference system (RD) as from the instant (O) of release of the said ballistic projectile (EB) by the corresponding attitude components of the carrier and of the ballistic projectile (EB).

13. System according to Claim 11, characterized in that the said delayed time reference signal (RT($\tau$)) is delivered to the input (RAZ VRD) of the inertial unit (1) for resetting to zero the projectile speed components, in order thus to define the said launch reference system (RD) after a predetermined time delay ($\tau$) counting from the instant of release of the said ballistic projectile (EB) with respect to the instantaneous speed components of the ballistic projectile, substantially equal to those of the carrier at the instant of release.

FIG.1 ART ANTERIEUR

FIG.2a

13

FIG. 2b

FIG._3